# DEMANDE DE BREVET EUROPEEN

(11) **EP 0 886 452 A1**
(43) Date de publication de la demande: **23.12.1998**
(21) Numéro de dépôt: 98201932.5
(22) Date de dépôt: 09.06.1998
(51) Int. Cl.: H04Q 7/32

(54) **Procédé de délivrance d'une information de temps par une station satellite d'un système de transmission.**

(30) Priorité: 17.06.1997 FR 9707508
(71) Demandeur: Koninklijke Philips Electronics N.V., 5621 BA Eindhoven (NL)
(72) Inventeur: Habib, Elia, 75008 Paris (FR)
(74) Mandataire: den Braber, Gerard Paul

(57) **Abrégé**

L'invention s'applique à un système de transmission d'un premier type d'informations entre une station de base et une station satellite.

Elle a pour but de fournir à l'utilisateur d'une station satellite un second type d'informations, constitué par des informations de temps (par exemple l'heure exprimée en heure/minute) sans qu'il soit nécessaire d'introduire une horloge interne dans ladite station satellite.

Pour cela, la station de base est dotée de moyens pour transmettre périodiquement l'information de temps à ses stations satellites. La période transmission est choisie de façon à être inférieure ou égale à la précision avec laquelle l'information de temps est délivrée (1 mn dans l'exemple précédent).

Applications: réseau de radio-communications mobiles notamment.

## Description

L'invention concerne un système de transmission d'informations d'un premier type, ledit système comportant au moins une station de base dotée de moyens de transmission d'au moins une information d'un second type, qui est une information de temps, vers au moins une station satellite.

L'invention concerne également une station de base dotée de moyens de transmission d'informations d'un premier et d'un second type vers au moins une station satellite, les informations dudit second type étant des informations de temps, ainsi qu'une station satellite destinée à échanger des informations d'un premier type avec une station de base, et dotée d'un dispositif de délivrance d'informations d'un second type, les informations dudit second type étant des informations de temps.

L'invention porte également sur un message de contrôle local "Local Control" tel que défini par les normes de type ETACS et AMPS.

L'invention concerne enfin un procédé de délivrance d'au moins une information d'un premier type, dite information de temps, par une station satellite destinée à échanger des informations d'un second type avec une station de base, ainsi qu'un procédé de transmission d'une information de temps d'une station radio de base vert une station radio mobile d'un réseau de radio-communications.

Le résumé de brevet japonais n°59-64939 décrit un système de radio mobile dans lequel une station radio de base transmet à une station radio mobile une information de temps. Cette information de temps est utilisée pour corriger une horloge interne de la station radio mobile.

L'utilisation d'une horloge interne dans une station radio mobile présente l'inconvénient de prendre de la place et de consommer de l'énergie ce qui réduit le temps d'autonomie de la station. Or l'encombrement et le temps d'autonomie des stations radio mobiles sont deux critères essentiels dans le choix des clients. Il est donc particulièrement important de les optimiser.

Pour cela, un système de transmission selon l'invention et tel que défini dans le paragraphe introductif est caractérisé en ce que, ladite information de temps étant définie avec une certaine précision, ladite station de base comporte des moyens pour activer lesdits moyens de transmission selon une période inférieure ou égale à ladite précision, et ladite station satellite comporte des moyens d'affichage des informations de temps transmises par ladite station de base.

Une station de base selon l'invention est caractérisée en ce que lesdites informations de temps étant définies avec une certaine précision, ladite station de base comporte des moyens pour activer lesdits moyens de transmission selon une période inférieure ou égale à ladite précision.

Une station satellite selon l'invention est caractérisée en ce que le dispositif de délivrance d'informations de temps comporte:
- des moyens de réception d'informations de temps définies avec une certaine précision et transmises par ladite station de base selon une période inférieure ou égale à ladite précision,
- des moyens d'affichage des informations de temps reçues.

Et un procédé d'affichage selon l'invention et tel que décrit dans le paragraphe introductif est caractérisé en ce que, lesdites informations de temps étant définies avec une certaine précision, il consiste:
- à transmettre périodiquement une information de temps, de la station de base vers la station satellite, selon une période inférieure ou égale à ladite précision,
- à afficher les informations de temps reçues par la station satellite sur l'écran de ladite station satellite.

Lorsque ledit système est un système de radiocommunications conforme à une norme du type ETACS ou AMPS, ladite information de temps est avantageusement transmise dans un message intitulé "Local Control" défini dans lesdites normes.

Conformément à ces normes ETACS, les stations radio de base d'un réseau de radio-télécommunications sont susceptibles d'envoyer aux stations radio mobiles qui se trouvent dans leur zone de couverture des messages appelés "Local Control" dont l'utilisation n'est pas définie par la norme. Ces messages ne sont actuellement pas utilisés par les opérateurs de réseaux. L'invention en propose ici une application particulièrement intéressante.

L'invention sera mieux comprise et d'autres détails apparaîtront à la lumière de la description qui va suivre en regard des dessins annexés qui sont donnés à titre d'exemples non limitatifs et dans lesquels:
- la figure 1 représente un exemple de système de transmission selon l'invention,
- la figure 2 donne le format d'un message "Local Control" défini dans la norme ETACS,
- la figure 3 est un diagramme indiquant les principales étapes d'un procédé de transmission d'une information de temps selon l'invention.
- la figure 4 est un diagramme indiquant les principales étapes d'un procédé de délivrance d'une information de temps selon l'invention.

On va maintenant décire un exemple de mise en oeuvre de l'invention, relatif à un système de radio-communications mobiles conforme à une norme de type ETACS ou AMPS. L'invention n'est toutefois pas limitée à cet exemple de réalisation. Elle s'applique par exemple à un système de téléphonie sans fils comportant une station de base et un ou plusieurs combinés. Elle est également applicable à d'autres normes de radio-communications mobiles.

Dans la description on se réfère dans un but de simplification aux normes ETACS et AMPS. Les références exactes de ces normes sont:
- norme ETACS: "Total Access Communications Systems - Mobile Station-Land Station Compatibility Specification Issue 4 - Amendment 2 - February 95",
- norme AMPS: "Mobile Station-Base Station Compatibility Standard for 800Mhz Analog Cellular - TIA/EIA/IS-91".

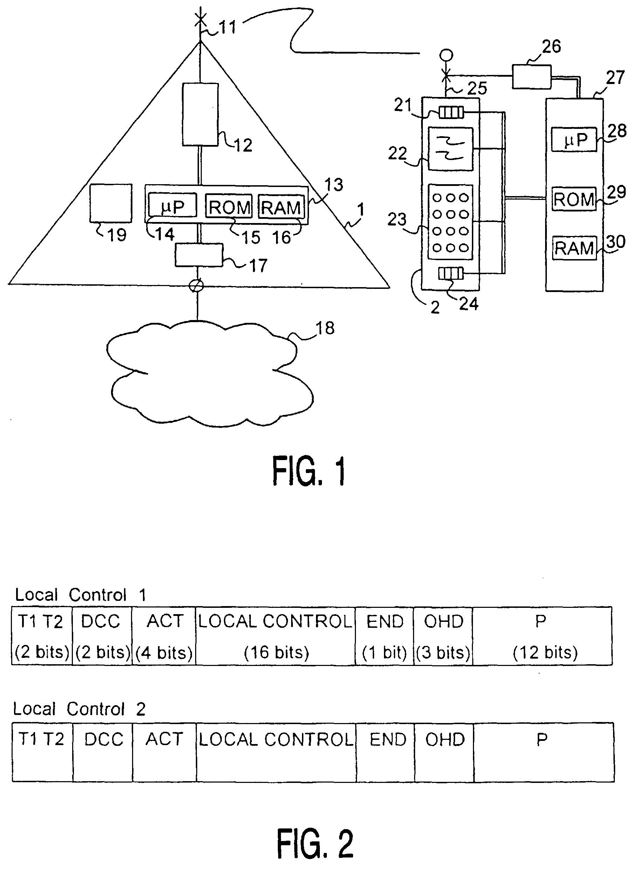

Sur la figure 1, on a représenté schématiquement un exemple de réseau de radiocommunications qui comporte notamment une station radio de base 1, et une station satellite 2, couramment appelée station radio mobile.

La station radio de base 1 comporte notamment une antenne 11 reliée à un dispositif d'émission/réception 12 qui est contrôlé par un ensemble à microprocesseur 13. Cet ensemble à microprocesseur 13 comporte un processeur proprement dit 14, une mémoire morte 15 qui contient les instructions nécessaires au fonctionnement de la station radio de base, et notamment celles nécessaires à la mise en oeuvre de l'invention, et une mémoire vive 16. L'ensemble à microprocesseur 13 est également relié à des moyens de connexion 17 au réseau 18 d'un opérateur ainsi qu'à un circuit d'horloge 19 qui est par exemple formé à partir d'un quartz.

La station radio mobile 2 comporte notamment un écouteur 21, un écran 22, un clavier 23, un micro 24 et une antenne 25. L'antenne 25 est reliée à un dispositif d'émission/réception 26 qui est contrôlé par un ensemble à microprocesseur 27. Cet ensemble à microprocesseur 27 comporte un processeur proprement dit 28, une mémoire morte 29 qui contient les instructions nécessaires au fonctionnement de la station radio mobile, et notamment celles nécessaires à la mise en oeuvre de l'invention, et une mémoire vive 30. Il est relié à l'écouteur 21, à l'écran 22, au clavier 23 et au micro 24 par l'intermédiaire d'un bus 31 et gère en particulier l'affichage d'informations sur l'écran 22.

A titre d'exemple non limitatif, les ensembles à microprocesseur 13 et 27 sont respectivement des processeurs 68000 de Motorola et 8051 d'Intel.

L'invention a pour but de fournir à l'utilisateur de la station radio mobile une information de temps, par exemple l'heure exprimée en heure/minute, sans qu'il soit nécessaire d'introduire une horloge interne dans la station mobile. Pour cela, les stations radio de base du réseau de radio-communications sont dotées de moyens pour transmettre périodiquement l'information de temps aux stations radio mobiles connues dans leurs zones de couverture. La période de transmission est choisie de façon à être inférieure ou égale à la précision avec laquelle l'information de temps est délivrée. Par exemple, si l'information de temps est exprimée en heure/minute, la période de transmission de cette information doit être inférieure ou égale à 1 minute. Si elle est exprimée en heure/minute/seconde, la période de transmission doit être inférieure ou égale à 1 seconde. Ainsi, l'information délivrée par la station radio mobile est toujours exacte.

Dans un mode de réalisation particulièrement avantageux, cette information de temps est transmise dans un message "Local Control" qui est notamment défini dans la norme ETACS.

Le format d'un tel message est représenté sur la figure 2. Il est constitué de deux messages appelés "Local Control 1" et "Local Control 2". Chacun de ces messages comporte:
- trois champs d'entête T1T2, DCC et ACT qui contiennent respectivement 2, 2 et 4 bits,
- un champ LOCAL CONTROL de 16 bits utilisé pour transmettre l'information souhaitée,
- trois champs de fin END, OHD et P qui contiennent respectivement 1, 3 et 12 bits.

L'utilisation et les valeurs de ces différents champs sont décrites en détails dans la norme précitée.

Les messages "Local Control" permettent donc de transmettre n'importe quelle information au choix de l'opérateur codée sur 32 bits. On dispose donc de suffisamment de place pour transmettre d'autres informations de temps que l'heure, par exemple la date (jour/mois/année), le créneau horaire de facturation (plein tarif ou tarifs réduits), ou même pour transmettre des informations d'un autre type, par exemple la température...

A titre d'exemple, pour transmettre l'heure et la date, on utilise dans l'ordre et en partant des bits les moins significatifs:
- six bits pour transmettre les minutes,
- cinq bits pour transmettre les heures,
- cinq bits pour transmettre les jours,
- quatre bits pour transmettre les mois,
- et sept bits pour transmettre l'année.

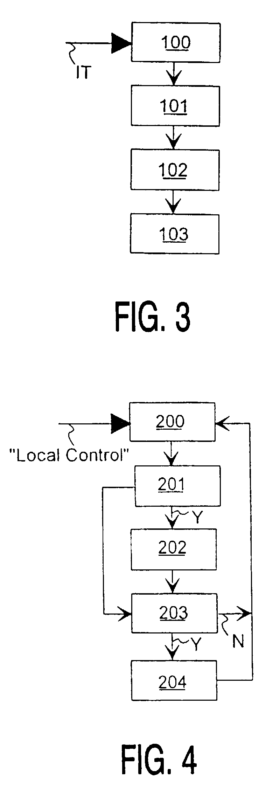

Sur la figure 3 on a représenté schématiquement un procédé de transmission d'une information de temps selon l'invention. Le processeur 14 reçoit périodiquement une interruption IT (case 100) à la suite de laquelle il réalise les opérations suivantes:
- lecture de l'information de temps contenue dans le circuit d'horloge 19 (case 101),
- formation d'un message "Local Control" qui contient cette information (case 102),
- envoi dudit message à toutes les stations radio mobiles qui sont connues de la station de base (case 103).

Sur la figure 4 on a représenté schématiquement un procédé de délivrance d'une information de temps selon l'invention. De façon classique, la station mobile est dotée d'un menu qui permet à l'utilisateur d'ajuster différents paramètres, d'activer ou de désactiver certaines options... Dans un mode de réalisation avantageux de l'invention, on permet ainsi à l'utilisateur d'activer ou de désactiver l'affichage d'une ou plusieurs informations reçues dans un message "Local Control" (heure, date, créneau horaire par exemple).

Dans la suite de la description, on considère que les messages "Local Control" transmettent deux informations de temps: la date et l'heure. A la case 200, la station radio mobile est en mode veille. Lorsqu'elle reçoit un message "Local Control", elle réalise les opérations suivantes:
- à la case 201, elle effectue tout d'abord un premier test pour déterminer si l'utilisateur a sélectionné l'option d'affichage de l'heure;
- si tel est le cas (flèche Y), la station traite le contenu du champ LOCAL CONTROL du message reçu pour en extraire l'heure qui est ensuite affichée sur l'écran 22 (case 202); puis elle poursuit son fonctionnement à la case 203;
- sinon (flèche N), elle poursuit directement son fonctionnement à la case 203;
- à la case 203, elle effectue un second test pour déterminer si l'utilisateur a sélectionné l'option d'affichage de la date;
- si tel est le cas (flèche Y), la station traite le contenu du champ LOCAL CONTROL du message reçu pour en extraire la date qui est ensuite affichée sur l'écran 22 (case 204); Puis elle retourne en mode veille;
- sinon (flèche N), elle retourne en mode veille (case 200).

Il va de soi que l'invention n'est pas limitée aux modes de réalisation qui viennent d'être décrits à titre d'exemple. Notamment on a considéré que la station de base transmettait deux informations de temps à la station satellite. Ce nombre n'est pas restrictif, et des informations d'un ou plusieurs autres types sont également susceptibles d'être transmises.

## Revendications

1. Système de transmission d'informations d'un premier type, ledit système comportant au moins une station de base (1) dotée de moyens de transmission (13, 15) d'au moins une information d'un second type, qui est une information de temps, vers au moins une station satellite (2),
caractérisé en ce que, ladite information de temps étant définie avec une certaine précision, ladite station de base comporte des moyens pour activer lesdits moyens de transmission selon une période inférieure ou égale à ladite précision, et ladite station satellite comporte des moyens d'affichage (22, 29) des informations de temps transmises par ladite station de base.

2. Système de transmission selon la revendication 1, caractérisé en ce que, ledit système est un système de radiocommunications conforme à une norme du type ETACS ou AMPS, et en ce que ladite information de temps est transmise dans un message de type "Local Control"

3. Message de type "Local Control" prévu pour transmission dans un système selon la revendication 1 ou 2 caractérisé en ce qu'il contient au moins une information de temps destinée à être utilisée par une station radio mobile.

4. Station de base dotée de moyens de transmission d'informations d'un premier et d'un second type vers au moins une station satellite, les informations dudit second type étant des informations de temps,
caractérisé en ce que, lesdites informations de temps étant définies avec une certaine précision, ladite station de base comporte des moyens pour activer lesdits moyens de transmission selon une période inférieure ou égale à ladite précision.

5. Station satellite destinée à échanger des informations d'un premier type avec une station de base, et dotée d'un dispositif de délivrance d'informations d'un second type, les informations dudit second type étant des informations de temps,
caractérisé en ce que le dispositif de délivrance d'informations de temps comporte:
- des moyens de réception d'informations de temps définies avec une certaine précision et transmises par ladite station de base selon une période inférieure ou égale à ladite précision,
- des moyens d'affichage des informations de temps reçues.

6. Procédé de délivrance d'une information d'un premier type, dite information de temps, par une station satellite destinée à échanger des informations d'un second type avec une station de base,
caractérisé en ce qu'il consiste:
- à recevoir des informations de temps définies avec une certaine précision et transmises par ladite station de base selon une période inférieure ou égale à ladite précision,
- à afficher les informations de temps reçues.

7. Procédé de transmission d'au moins une information de temps d'une station radio de base vers une station radio mobile d'un réseau de radio-communications, caractérisé en ce que ledit réseau de radio-communications étant conforme à une norme du type ETACS ou AMPS, il consiste à transmettre ladite information de temps dans un message de type "Local Control".

8. Procédé de transmission d'au moins une information d'un premier type, dite information de temps, d'une station radio de base vers une station satellite destinées à échanger des informations d'un second type, caractérisé en ce que, ladite information de temps étant définie avec une certaine précision, il consiste à transmettre ladite information avec une période inférieure ou égale à ladite précision.
